# EUROPEAN PATENT SPECIFICATION

(11) **EP 2 869 987 B1**
(45) Date of publication and mention of the grant of the patent: **23.10.2019**
(21) Application number: 13744865.0
(22) Date of filing: 08.07.2013
(51) Int. Cl.: B32B 27/08, B32B 27/12, C09J 123/12, E04D 5/10

(54) **ADHERED ROOFING SYSTEM COMPRISING A THERMOPLASTIC MEMBRANE INCLUDING POLYMER WITH ISOCYANATE-REACTIVE FUNCTIONALITY**
VERKLEBTES DACHSYSTEM UMFASSEND EINE THERMOPLASTISCHE MEMBRAN MIT EINEM POLYMER MIT ISOCYANATREAKTIVER FUNKTIONALITÄT
SYSTÈME DE TOITURE COLLÉE COMPRENANT UNE MEMBRANE THERMOPLASTIQUE COMPRENANT UN POLYMÈRE AVEC UNE FONCTIONNALITÉ RÉACTIVE AVEC LES ISOCYANATES

(30) Priority: 06.07.2012 US 201261668783 P
(43) Date of publication of application: 13.05.2015
(73) Proprietor: Firestone Building Products Company, LLC, Nashville, TN 37201 (US)
(72) Inventor: HUBBARD, Michael John, Anderson, Indiana 46011 (US); KALWARA, Joseph John, Indianapolis, Indiana 46220 (US)
(74) Representative: Beckmann, Claus
(86) International application number: PCT/US2013/049547
(87) International publication number: WO 2014/008501

(56) References cited:
- US-A1- 2005 048 236
- US-A1- 2006 160 949
- US-A1- 2009 181 216
- DATABASE WPI Week 201204 Thomson Scientific, London, GB; AN 2011-Q72717 XP002716979, & WO 2011/158906 A1 (SEKISUI CHEM CO LTD) 22 December 2011 (2011-12-22)

## Description

### FIELD OF THE INVENTION

The present invention relates to thermoplastic membranes containing polymer with isocyanate-reactive functionality and the use of these membranes in roofing systems that employ polyurethane adhesives.

### BACKGROUND OF THE INVENTION

Flat or low-sloped roofs are often covered with polymeric membranes. Common among the membranes that have the mechanical properties needed to be technologically useful are thermoset membranes prepared with EPDM rubber, or thermoplastic membranes prepared with ethylene-propylene reactor copolymers or blends of polyethylene and polypropylene. These membranes typically contain carbon black and/or mineral fillers, which provide advantageous mechanical properties to the membranes.

U.S. Pat. No. 4,996,812 discloses a composite roof structure including a layer of adhesive material, such as a foamed, cellular polyurethane adhesive, along with a flexible rubber or thermoplastic membrane including a fleece-like matting layer secured to the underside thereof. The adhesive is typically sprayed onto the roof substrate wherein, prior to solidification of the adhesive, the fleece-lined membrane is pressed into the adhesive so that the matting becomes embedded therein.

To simplify installation and to minimize costs associated with the polymeric membranes, a need exists for a non-fleece membrane sheet that can be directly adhered to the roof substrate. Since the industry is accustomed to using polyurethane-type foam adhesives, it would be highly desirable to use polyurethane adhesives in this regard.

U.S. Patent Application Publication No. 2009/0181216 A1 describes a roofing membrane comprising at least two distinct polymeric layers, where one layer includes a fluorine-containing polymer.

U.S. Patent Application Publication No. 2010/0093942 A1 describes functionalized olefin polymers, compositions and articles prepared therefrom, and a method of making the same.

### SUMMARY OF THE INVENTION

The present invention provides an adhered roofing system as defined in claim 1.

The present invention also provides a method of adhering a thermoplastic membrane to a roof substrate, the method comprising applying a polyurethane adhesive to the roof substrate and applying a thermoplastic membrane to the polyurethane adhesive, where the thermoplastic membrane includes at least one layer, wherein the at least one layer includes a first thermoplastic polymer and a second polymer having at least one isocyanate-reactive substituent dispersed within said first thermoplastic polymer, and where the membrane is devoid of a fleece backing.

### BRIEF DESCRIPTION OF THE DRAWINGS

Fig. 1a is a perspective view of a multi-layered membrane including two laminated layers.
Fig. 1b is a perspective view of a multi-layered membrane shown in exploded view including two laminated layers.
Fig. 2 is a perspective view of a multi-layered membrane including coextruded laminated layers.
Fig. 3 is a perspective, cross-sectional view of a roof assembly according to embodiments of the present invention.

### DETAILED DESCRIPTION OF ILLUSTRATIVE EMBODIMENTS

Embodiments of the present invention are based, at least in part, on the discovery of a thermoplastic roofing membrane including at least one layer having a polymer with isocyanate-reactive functionality, which may also be referred to as the isocyanate-reactive polymer. It has been discovered that these membranes can advantageously be adhered to a roof surface by using a polyurethane-type adhesive without using a secondary attachment mechanism such as a fleece backing that is secured to the membrane: It is believed that the isocyanate-reactive functionality on the polymer reacts or interacts with the isocyanate component of the polyurethane adhesive and thereby increases the affinity between the adhesive and the membrane surface. In fact, to the extent that the isocyanate-reactive functionality reacts with the isocyanate component of the adhesive, a chemical bond between the membrane and the adhesive system is believed to be present. Furthermore, it has advantageously been discovered that the polymer bearing an isocyanate-reactive functionality can be added to the thermoplastic membranes without having a deleterious impact on the other performance attributes of the membrane.

### Membrane Construction

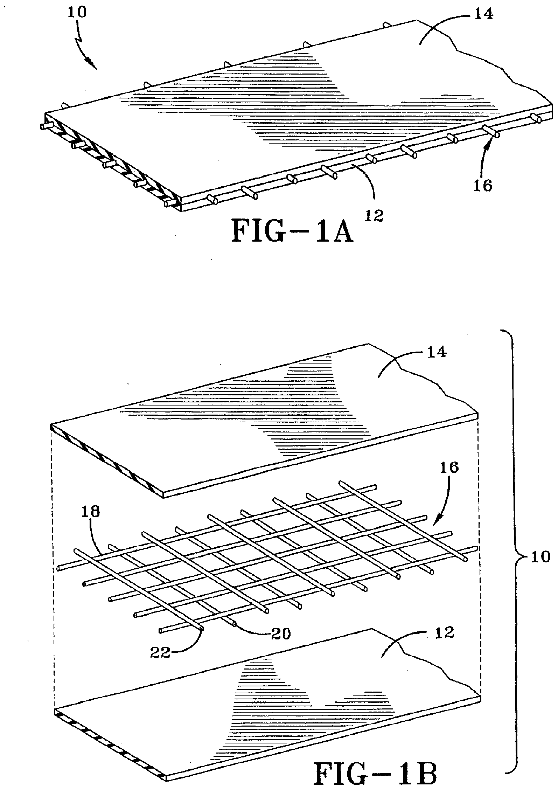

In one or more embodiments, the membranes used in the present invention include two layers laminated to one another with an scrim disposed between the layers. In one or more embodiments, both layers include the isocyanate-reactive polymer dispersed within a thermoplastic polyolefin. One layer of a two-layered, laminated membrane includes a isocyanate-reactive polymer dispersed within a thermoplastic polyolefin. The one layer of the two-layered, laminated membrane including the isocyanate-reactive polymer is the lower layer or bottom layer of the membrane, which is the layer that is contacted to the roof substrate; i.e. the side opposite the surface of the membrane that is exposed to the environment. An example of a two-layered, laminated membrane is shown in Figs 1A and IB, which shows membrane 10 having first or lower layer 12, which includes the isocyanate-reactive polymer, the second or upper layer 14, which may be devoid or substantially devoid of the isocyanate-reactive polymer, and scrim 16 disposed therebetween. Reference to substantially devoid includes that amount or less of a particular constituent (e.g. isocyanate-reactive polymer) that does not have an appreciable impact on the layer or membrane. Due to the presence of the isocyanate-reactive polymer within lower layer 12, the membrane can be secured to a roof substrate by use of a polyurethane adhesive, which is believed to react or interact with the isocyanate-reactive polymer.

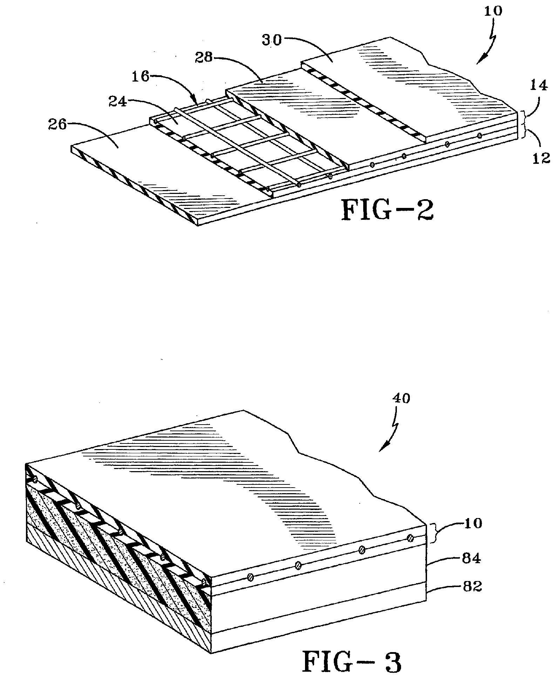

In one or more embodiments, the membranes used in the present invention are multi-layered membranes that include one or more coextruded layers. In this respect, see U.S. Publ. Nos. 2009/0137168, 2009/0181216, 2009/0269565, 2007/0193167, and 2007/0194482. In one or more embodiments, at least one of the coextruded layers includes an isocyanate-reactive polymer. For example, and with reference to Fig. 2, lower or bottom layer 12 includes coextruded layers 24 and 26, and upper layer 14 optionally includes coextruded layers 28 and 30. Lower layer 12 and upper layer 14 may be laminated to each other with scrim 16 disposed therebetween. Coextruded layer 26, which may be referred to as the bottom coextruded layer 26, includes the isocyanate-reactive polymer. Due to the presence of the isocyanate-reactive polymer within bottom coextruded layer 26, the membrane can be secured to a roof substrate by use of a polyurethane adhesive, which is believed to react or interact with the isocyanate-reactive polymer. In one or more embodiments, upper layer 14 may include isocyanate-reactive polymer; e.g., top layer 30 may include isocyanate-reactive polymer. As a result of this configuration, adjacent membranes can be lap-sealed using a polyurethane adhesive.

In one or more embodiments, the thickness of coextruded layers 24 and 26 may be the same or substantially similar. In other embodiments, the thickness of coextruded bottom layer 26 may be thinner than coextruded upper layer 24, which will provide economic benefit by minimizing the amount of the isocyanate-reactive polymer within the overall membrane while still providing the isocyanate-reactive polymer in a location that will allow it to provide adequate bonding to the adhesive.

In one or more embodiments, the remaining layers of the multi-layered membrane may include the isocyanate-reactive polymer. In other embodiments, the remaining layers of the multi-layered membrane may be devoid of isocyanate-reactive polymer. For example, the coextruded upper layer 14 may be devoid of the isocyanate-reactive polymer. Also, the one or more optional coextruded layers of the upper ply (e.g. coextruded layer 24 of ply 12) may be devoid of the isocyanate-reactive polymer.

In one or more embodiments, the overall thickness of the membranes used in the present invention may be from about 20 mils up to about 100 mils, and in certain embodiments from about 30 mils to about 80 mils. The layers (e.g., layers 12 and 14) may each account for about half of the overall thickness (e.g., 10 mils to about 40 mils), with a small fraction of the overall thickness (e.g., about 5 mils) deriving from the presence of the scrim. Where the membrane includes one or more coextruded layers, the bottom layer 26 may, in certain embodiments, have a thickness from about 2 mils to about 20 mils, or in other embodiments from about 4 mils to about 12 mils.

In one or more embodiments, the membranes used in the present invention may also be constructed by laminating a thin sheet of polymer having dispersed therein the isocyanate-reactive polymer to one or more sheets of thermoplastic membrane. For example, a thin film of polymer having the isocyanate-reactive polymer dispersed therein may be laminated to a conventional thermoplastic membrane or to a component (i.e., the lower layer) of a conventional thermoplastic membrane. The thin sheet having the isocyanate-reactive polymer dispersed therein may have a thickness of about 2 mils to about 20 mils, or in other embodiments from about 4 mils to about 12 mils.

In one or more embodiments, the scrim may include conventional scrim. For example, polyester scrims may be employed. In these or other embodiments, polyester scrims including fiberglass reinforcement may be employed.

### Thermoplastic Component

In one or more embodiments, regardless of the number of layers or co-extrudates of the membranes, each layer or co-extrudate includes a thermoplastic polymer (excluding any scrim reinforcement). Any other ingredients or constituents of each layer is dispersed within the thermoplastic polymer, and therefore reference may be made to a thermoplastic component that forms a matrix in which the other substituents are dispersed. As noted above, at least one layer of the membrane includes a isocyanate-reactive polymer, which is likewise dispersed within the thermoplastic component or matrix. Inasmuch as the isocyanate-reactive polymer may also be a thermoplastic polymer, reference may be made to first and second thermoplastic polymers. For example, the thermoplastic polymer forming the matrix, which accounts for the major volume fraction of any given layer, may be referred to as a first thermoplastic polymer, and where the isocyanate-reactive polymer is also a thermoplastic polymer, it may be referred to as a second thermoplastic polymer bearing an isocyanate-reactive functionality or group.

In one or more embodiments, the thermoplastic component includes a thermoplastic olefinic polymer, which includes one or more *mer* units deriving from olefinic monomer. Blends of polymers may also be used. These blends include physical blends as well as reactor blends. In one or more embodiments, the thermoplastic olefinic polymer may derive from recycled thermoplastic polyolefin membranes as described in copending application serial number 11/724,768.

In one or more embodiments, the thermoplastic olefinic polymer may include an olefinic reactor copolymer, which may also be referred to as in-reactor copolymer. Reactor copolymers are generally known in the art and may include blends of olefinic polymers that result from the polymerization of ethylene and α-olefins (e.g., propylene) with sundry catalyst systems. In one or more embodiments, these blends are made by in-reactor sequential polymerization. Reactor copolymers useful in one or more embodiments include those disclosed in U.S. Patent No. 6,451,897. Reactor copolymers, which are also referred to as TPO resins, are commercially available under the tradename HIFAX™ (Lyondellbassel); these materials are believed to include in-reactor blends of ethylene-propylene rubber and polypropylene or polypropylene copolymers. In one or more embodiments, the in-reactor copolymers may be physically blended with other polyolefins. For example, in reactor copolymers may be blended with linear low density polyethene.

In other embodiments, the thermoplastic component may include a physical blend of chemically-distinct olefinic polymers. In one or more embodiments, blends of propylene-based thermoplastic polymer, plastomer, and/or low density polyethylene may be used. In other embodiments, the thermoplastic olefinic component is a blend of a linear low density polyethylene and a propylene-based plastic.

In one or more embodiments, the propylene-based polymer may include polypropylene homopolymer or copolymers of propylene and a comonomer, where the copolymer includes, on a mole basis, a majority of *mer* units deriving from propylene. In one or more embodiments, the propylene-based copolymers may include from about 2 to about 6 mole percent, and in other embodiments from about 3 to about 5 mole percent *mer* units deriving from the comonomer with the remainder including *mer* units deriving from propylene. In one or more embodiments, the comonomer includes at least one of ethylene and an α-olefin. The α-olefins may include butene-1, pentene-1, hexene-1, oxtene-1, or 4-methyl-pentene-1. In one or more embodiments, the copolymers of propylene and a comonomer may include random copolymers. Random copolymers may include those propylene-based copolymers where the comonomer is randomly distributed across the polymer backbone.

The propylene-based polymers employed in one or more embodiments of this invention may be characterized by a melt flow rate of from about 0.5 to about 15 dg/min, in other embodiments from about 0.7 to about 12 dg/min, in other embodiments from about 1 to about 10 dg/min, and in other embodiments from about 1.5 to about 3 dg/min per ASTM D-1238 at 230°C and 2.16 kg load. In these or other embodiments, the propylene-based polymers may have a weight average molecular weight (M_{W}) of from about 1 x 10⁵ to about 5 x 10⁵ g/mole, in other embodiments from about 2 x 10⁵ to about 4 x 10⁵ g/mole, and in other embodiments from about 3 x 10⁵ to about 4 x 10⁵ g/mole, as measured by GPC with polystyrene standards. The molecular weight distribution of these propylene-based copolymer may be from about 2.5 to about 4, in other embodiments from about 2.7 to about 3.5, and in other embodiments from about 2.8 to about 3.2.

In one or more embodiments, propylene-based polymers may be characterized by a melt temperature (Tₘ) that is from about 165°C to about 130°C, in other embodiments from about 160 to about 140°C, and in other embodiments from about 155°C to about 140°C. In one or more embodiments, particularly where the propylene-based polymer is a copolymer of propylene and a comonomer, the melt temperature may be below 160°C, in other embodiments below 155°C, in other embodiments below 150°C, and in other embodiments below 145°C. In one or more embodiments, they may have a crystallization temperature (T_{c}) of about at least 90°C, in other embodiments at least about 95°C, and in other embodiments at least 100°C, with one embodiment ranging from 105° to 115°C.

Also, these propylene-based polymers may be characterized by having a heat of fusion of at least 25 J/g, in other embodiments in excess of 50 J/g, in other embodiments in excess of 100 J/g, and in other embodiments in excess of 140 J/g.

In one or more embodiments, the propylene-based polymers may be characterized by a flexural modulus, which may also be referred to as a 1% secant modulus, in excess of 120,000 psi, in other embodiments in excess of 125,000, in other embodiments in excess of 130,000 psi, in other embodiments in excess of 133,000 psi, in other embodiments in excess of 135,000 psi, and in other embodiments in excess of 137,000 psi, as measured according to ASTM D-790.

Useful propylene-based polymers include those that are commercially available. For example, propylene-based polymers can be obtained under the tradename PP7620Z™ (Fina), PP33BF01™ (Equistar), or under the tradename TR3020™ (Sunoco).

In one or more embodiments, the thermoplastic polymer may include a blend of olefinic polymers. Useful blends include those described in International Application No. PCT/US06/033522. For example, a particular blend may include (i) a plastomer, (ii) a low density polyethylene, and (iii) a propylene-based polymer.

In one or more embodiments, the plastomer includes an ethylene-α-olefin copolymer. The plastomer employed in one or more embodiments of this invention includes those described in U.S. Patent Nos. 6,207,754, 6,506,842, 5,226,392, and 5,747,592. This copolymer may include from about 1.0 to about 15 mole percent, in other embodiments from about 2 to about 12, in other embodiments from about 3 to about 9 mole percent, and in other embodiments from about 3.5 to about 8 mole percent *mer* units deriving from α-olefins, with the balance including *mer* units deriving from ethylene. The α-olefin employed in preparing the plastomer may include butene-1, pentene-1, hexene-1, octene-1, or 4-methyl-pentene-1.

The plastomer can be characterized by a density of from about 0.865 g/cc to about 0.900 g/cc, in other embodiments from about 0.870 to about 0.890 g/cc, and in other embodiments from about 0.875 to about 0.880 g/cc per ASTM D-792. In these or other embodiments, the density of the plastomers may be less than 0.900 g/cc, in other embodiments less than 0.890 g/cc, in other embodiments less than 0.880 g/cc, and in other embodiments less than 0.875 g/cc.

In one or more embodiments, the plastomer may be characterized by a weight average molecular weight of from about 7 x 10⁴ to 13 x 10⁴ g/mole, in other embodiments from about 8 x 10⁴ to about 12 x 10⁴ g/mole, and in other embodiments from about 9 x 10⁴ to about 11 x 10⁴ g/mole as measured by using GPC with polystyrene standards. In these or other embodiments, the plastomer may be characterized by a weight average molecular weight in excess of 5 x 10⁴ g/mole, in other embodiments in excess of 6 x 10⁴ g/mole, in other embodiments in excess of 7 x 10⁴ g/mole, and in other embodiments in excess of 9 x 10⁴ g/mole. In these or other embodiments, the plastomer may be characterized by a molecular weight distribution (M_{w}/Mₙ) that is from about 1.5 to 2.8, in other embodiments 1.7 to 2.4, and in other embodiments 2 to 2.3.

In these or other embodiments, the plastomer may be characterized by a melt index of from about 0.1 to about 8, in other embodiments from about 0.3 to about 7, and in other embodiments from about 0.5 to about 5 per ASTM D-1238 at 190°C and 2.16 kg load.

The uniformity of the comonomer distribution of the plastomer of one or more embodiments, when expressed as a comonomer distribution breadth index value (CDBI), provides for a CDBI of greater than 60, in other embodiments greater than 80, and in other embodiments greater than 90.

In one or more embodiments, the plastomer may be characterized by a DSC melting point curve that exhibits the occurrence of a single melting point break occurring in the region of 50 to 110°C.

The plastomer may be prepared by using a single-site coordination catalyst including metallocene catalyst, which are conventionally known in the art.

Useful plastomers include those that are commercially available. For example, plastomer can be obtained under the tradename EXXACT™ 8201 (ExxonMobil); or under the tradename ENGAGE™ 8180 (Dow DuPont).

In one or more embodiments, the low density polyethylene includes an ethylene-α-olefin copolymer. In one or more embodiments, the low density polyethylene includes linear low density polyethylene. The linear low density polyethylene employed in one or more embodiments of this invention may be similar to that described in U.S. Patent No. 5,266,392. This copolymer may include from about 2.5 to about 13 mole percent, and in other embodiments from about 3.5 to about 10 mole percent, *mer* units deriving from α-olefins, with the balance including *mer* units deriving from ethylene. The α-olefin included in the linear low density polyethylene may include butene-1, pentene-1, hexene-1, octene-1, or 4-methyl-pentene-1. In one or more embodiments, the linear low density polyethylene is devoid or substantially devoid of propylene *mer* units (*i.e.,* units deriving from propylene). Substantially devoid refers to that amount or less of propylene *mer* units that would otherwise have an appreciable impact on the copolymer or the compositions used in this invention if present.

The linear low density polyethylene can be characterized by a density of from about 0.885 g/cc to about 0.930 g/cc, in other embodiments from about 0.900 g/cc to about 0.920 g/cc, and in other embodiments from about 0.900 g/cc to about 0.910 g/cc per ASTM D-792.

In one or more embodiments, the linear low density polyethylene may be characterized by a weight average molecular weight of from about 1 x 10⁵ to about 5 x 10⁵ g/mole, in other embodiments 2 x 10⁵ to about 10 x 10⁵ g/mole, in other embodiments from about 5 x 10⁵ to about 8 x 10⁵ g/mole, and in other embodiments from about 6 x 10⁵ to about 7 x 10⁵ g/mole as measured by GPC with polystyrene standards. In these or other embodiments, the linear low density polyethylene may be characterized by a molecular weight distribution (M_{w}/Mₙ) of from about 2.5 to about 25, in other embodiments from about 3 to about 20, and in other embodiments from about 3.5 to about 10. In these or other embodiments, the linear low density polyethylene may be characterized by a melt flow rate of from about 0.2 to about 10 dg/min, in other embodiments from about 0.4 to about 5 dg/min, and in other embodiments from about 0.6 to about 2 dg/min per ASTM D-1238 at 230°C and 2.16 kg load.

The linear low density polyethylene used in one or more embodiments of this invention may be prepared by using a convention Ziegler Natta coordination catalyst system.

Useful linear low density polyethylene includes those that are commercially available. For example, linear low density polyethylene can be obtained under the tradename Dowlex™ 2267G (Dow); or under the tradename DFDA-1010 NT7 (Dow); or under the tradename GA502023 (Lyondell).

### Isocyanate-Reactive Polymer

As explained above, the thermoplastic membranes used in the present invention include a polymer having an isocyanate-reactive functionality, which may also be referred to as a isocyanate-reactive polymer. In one or more embodiments, the one or more isocyanate-reactive functionalities on the polymer may be located at the terminal ends of a linear polymer. In these or other embodiments, the one or more isocyanate-reactive functionalities may be located along the backbone of the polymer. In particular embodiments, the polymer includes multiple isocyanate-reactive functionalities.

In one or more embodiments, isocyanate-reactive functionalities include those substituents (which may also be referred to as groups) that will react with an isocyanate substituent. As is known in the art, hydroxyl groups will react with isocyanate functionalities in a polyurethane-type reaction. Inasmuch as the reaction between hydroxyl groups and isocyanate groups are well known, reference herein may be made to hydroxyl-bearing polymers (although it should be understood that the concepts of the invention can be expanded to other isocyanate-reactive polymers). In other embodiments, isocyanate-reactive functional groups include amine groups.

In one or more embodiments, the hydroxyl-bearing polymer includes at least 0.05 weight percent, in other embodiments at least 0.5 weight percent, in other embodiments at least 1 weight percent, and in other embodiments at least 3 weight percent hydroxyl functionality (i.e., weight of the hydroxyl functionalities) based on the entire weight of the polymer. In these or other embodiments, the hydroxyl-bearing polymer includes at most 15 weight percent, in other embodiments at most 7 weight percent, and in other embodiments at most 5 weight percent hydroxyl functionality based on the entire weight of the polymer. In one or more embodiments, the hydroxyl-bearing polymer includes from about 0.05 to about 15 weight percent, in other embodiments from about 0.5 to about 7 weight percent, and in other embodiments from about 1 to about 5 weight percent hydroxyl functionality based on the entire weight of the polymer.

Without wishing to be bound by any particular theory, it is believed that the isocyanate-reactive polymer entangles with the thermoplastic polymer that forms the matrix of the membrane. Thus, in one or more embodiments, the isocyanate-reactive polymer has sufficient molecular weight (which molecular weight yields sufficient length) to entangle. In one or more embodiments, the isocyanate-reactive polymer has a length that is at least 1 times the entanglement length of the polymer, in other embodiments at least 1.2 times the entanglement length of the polymer, in other embodiments at least 1.5 times the entanglement length of the polymer, and in other embodiments at least 2 times the entanglement length of the polymer.

In one or more embodiments, the isocyanate-reactive polymer has a number average molecular weight of at least 50 kg/mole, in other embodiments at least 75 kg/mole, and in other embodiments at least 100 kg/mole. In these or other embodiments, the isocyanate-reactive polymer as a number average molecular weight of at most 500 kg/mole, in other embodiments at most 300 kg/mole, and in other embodiments at most 200 kg/mole. In one or more embodiments, the isocyanate-reactive polymer has a number average molecular weight of from about 50 kg/mole to about 500, in other embodiments from about 75 to about 300 kg/mole, and in other embodiments from about 100 to about 250 kg/mole.

In one or more embodiments, the backbone of the isocyanate-reactive polymer is miscible with the thermoplastic matrix of the membrane. In other words, in one or more embodiments, the backbone of the isocyanate-reactive polymer does not phase separate from the matrix polymer. In other embodiments, portions of the isocyanate-reactive polymer backbone phase separate from the thermoplastic matrix. For example, where the backbone includes a block copolymer, one or more segments of the block copolymer may phase separate from the thermoplastic matrix. In these or other embodiments, at least one or more segments of a block copolymer backbone may be miscible with the thermoplastic phase.

In one or more embodiments, the isocyanate-reactive polymer is a block copolymer including at least one hard segment or block and at least one soft segment or block.

In one or more embodiments, the soft blocks of the block copolymer can be characterized by a glass transition temperature (Tg) of less than 25°C, in other embodiments less than 0°C, and in other embodiments less than -20°C.

In one or more embodiments, the soft block can include a unit or units deriving from conjugated diene monomers and optionally vinyl aromatic monomers. Suitable diene monomers include 1,3-butadiene, isoprene, piperylene, phenylbutadiene, and mixtures thereof. Those units deriving from conjugated diene monomers can optionally be hydrogenated. Suitable vinyl aromatic monomers include styrene, alkyl-substituted styrenes such as paramethyl styrene, and α-methyl styrene, as well as mixtures thereof.

In one or more embodiments, the hard blocks of the block copolymer can be characterized by a glass transition temperature (Tg) of greater than 25°C, in other embodiments greater than 50°C, and in other embodiments greater than 75°C.

In one or more embodiments, the hard blocks can include polymeric units deriving from vinyl aromatic monomers. Useful vinyl aromatics include styrene, alkyl-substituted styrenes such as paramethyl styrene, and α-methyl styrene, as well as mixtures thereof.

In one or more embodiments, examples of useful block copolymer backbones include, but are not limited to, styrene/butadiene rubber (SBR), styrene/isoprene rubber (SIR), styrene/isoprene/butadiene rubber (SIBR), styrene-butadiene-styrene block copolymer (SBS), hydrogenated styrene-butadiene-styrene block copolymer (SEBS (which may also be referred to as polystyrene-b-poly(ethylene/butylenes)-b-polystyrene copolymer)), hydrogenated styrene-butadiene block copolymer (SEB), styrene-isoprene-styrene block copolymer (SIS), styrene-isoprene block copolymer (SI), hydrogenated styrene-isoprene block copolymer (SEP (which may also be referred to as polystyrene-b-poly(ethylene/propylene copolymer)), hydrogenated styrene-isoprene-styrene block copolymer (SEPS (which may also be referred to as polystyrene-b-poly(ethylene/propylene)-b-polystyrene copolymer)), styrene-ethylene/butylene-ethylene block copolymer (SEBE), styrene-ethylene-styrene block copolymer (SES), ethylene-ethylene/butylene block copolymer (EEB), ethylene-ethylene/butylene/styrene block copolymer (hydrogenated BR-SBR block copolymer), styrene-ethylene/butylene-ethylene block copolymer (SEBE), polystyrene-b-poly(ethylene-ethylene/propylene)-b-polystyrene (SEEPS), ethylene-ethylene/butylene-ethylene block copolymer (EEBE), and mixtures thereof.

In one or more embodiments, the block copolymers include those disclosed in U.S. Patent Nos. 6,177,517 B1, and 6,369,160 B1, as well as International Patent Applications WO 96/20249 and WO 96/23823.

Practice of the present invention is not necessarily limited by the manner in which the isocyanate-reactive polymer is prepared. Many hydroxyl-bearing polymers that can be employed in practice of the present invention are commercially available. For example, suitable functionalized block copolymers are commercially available from any of the KRATON Polymer companies. Examples are KRATON® G1652, KRATON® G1657, KRATON® G1726, KRATON® FG1901 and KRATON® FG1924. Other useful polymers are available from Kuraray under the Tradename SEPTON. An example includes hydroxyl terminated polystyrene-b-poly(ethylene-ethylene/propylene)-b-polystyrene available under the tradename SEPTON HG 252, HG 8004, and HG 8006. Other thermoplastic elastomer block copolymers include block copolymers of a hydrogenated styrene block copolymer (e.g., SEPS or SEBS) and thermoplastic polyurethane. These copolymers are commercially available under the tradename S 5865 (Septon).

### Other Ingredients

The thermoplastic membranes used in the present invention may also include other ingredients such as those that are convention in thermoplastic membranes. For example, other useful additives or constituents may include flame retardants, stabilizers, pigments, and fillers.

In one or more embodiments, useful flame retardants include and compound that will increase the burn resistivity, particularly flame spread such as tested by UL 94 and/or UL 790, of the laminates used in the present invention. Useful flame retardants include those that operate by forming a char-layer across the surface of a specimen when exposed to a flame. Other flame retardants include those that operate by releasing water upon thermal decomposition of the flame retardant compound. Useful flame retardants may also be categorized as halogenated flame retardants or non-halogenated flame retardants.

Exemplary non-halogenated flame retardants include magnesium hydroxide, aluminum trihydrate, zinc borate, ammonium polyphosphate, melamine polyphosphate, and antimony oxide (Sb₂O₃). Magnesium hydroxide (Mg(OH)₂) is commercially available under the tradename Vertex™ 60, ammonium polyphosphate is commercially available under the tradename Exolite™ AP 760 (Clarian), which is sold together as a polyol masterbatch, melamine polyphosphate is available under the tradename Budit™ 3141 (Budenheim), and antimony oxide (Sb₂O₃) is commercially available under the tradename Fireshield™. Those flame retardants from the foregoing list that are believed to operate by forming a char layer include ammonium polyphosphate and melamine polyphosphate.

In one or more embodiments, treated or functionalized magnesium hydroxide may be employed. For example, magnesium oxide treated with or reacted with a carboxylic acid or anhydride may be employed. In one embodiment, the magnesium hydroxide may be treated or reacted with stearic acid. In other embodiments, the magnesium hydroxide may be treated with or reacted with certain silicon-containing compounds. The silicon-containing compounds may include silanes, polysiloxanes including silane reactive groups. In other embodiments, the magnesium hydroxide may be treated with maleic anhydride. Treated magnesium hydroxide is commercially available. For example, Zerogen™ 50.

Examples of halogenated flame retardants may include halogenated organic species or hydrocarbons such as hexabromocyclododecane or N,N'-ethylene-bis-(tetrabromophthalimide). Hexabromocyclododecane is commercially available under the tradename CD-75P™ (ChemTura). N,N'-ethylene-bis-(tetrabromophthalimide) is commercially available under the tradename Saytex™ BT-93 (Albemarle).

In one or more embodiments, the use of char-forming flame retardants (e.g. ammonium polyphosphate and melamine polyphosphate) has unexpectedly shown advantageous results when used in conjunction with nanoclay within the cap layer of the laminates. It is believed that there may be a synergistic effect when these compounds are present in the cap layer. As a result, the cap layer of the laminates are devoid of or substantially devoid of halogenated flame retardants and/or flame retardants that release water upon thermal decomposition. Substantially devoid referring to that amount or less that does not have an appreciable impact on the laminates, the cap layer, and/or the burn resistivity of the laminates.

In one or more embodiments, the membranes used in the invention may include a stabilizers. Stabilizers may include one or more of a UV stabilizer, an antioxidant, and an antiozonant. UV stabilizers include Tinuvin™ 622. Antioxidants include Irganox™ 1010.

### Amounts

In one or more embodiments, the membranes used in the present invention include at least 3 weight percent, in other embodiments at least 5 weight percent, and in other embodiments at least 7 weight percent of the isocyanate-reactive polymer (e.g. hydroxyl-bearing polymer) based on the entire weight of the membrane (excluding any scrim reinforcement). In one or more embodiments, the membranes used in the present invention include at most 50 weight percent, in other embodiments at most 25 weight percent, and in other embodiments at most 15 weight percent of the isocyanate-reactive polymer based on the entire weight of the membrane (excluding any scrim reinforcement). In one or more embodiments, the thermoplastic membranes include from about 3 to about 50, in other embodiments from about 5 to about 25, and in other embodiments from about 7 to about 15 weight percent of the isocyanate-reactive polymer based upon the entire weight of the membrane (excluding any scrim reinforcement).

### Method of Making

In one or more embodiments, the membranes used in the present invention may be prepared by employing conventional techniques. For example, the various ingredients can be separately fed into a reaction extruder and pelletized or directly extruded into membrane or laminate sheet. In other embodiments, the various ingredients can be combined and mixed within a mixing apparatus such as an internal mixer and then subsequently fabricated into membrane sheets or laminates.

In one or more embodiments, the membranes used in the present invention may be prepared by extruding a polymeric composition into a sheet. Multiple sheets may be extruded and joined to form a laminate. A membrane including a reinforcing layer may be prepared by extruding at least one sheet on and/or below a reinforcement (e.g., a scrim). In other embodiments, the polymeric layer may be prepared as separate sheets, and the sheets may then be calandered with the scrim sandwiched therebetween to form a laminate. In one or more embodiments, the membranes used in the present invention are prepared by employing co-extrusion technology. Useful techniques include those described in copending U.S. Serial Nos. 11/708,898 and 11/708,903.

Following extrusion, and after optionally joining one or more polymeric layers, or optionally joining one or more polymeric layer together with a reinforcement, the membrane may be fabricated to a desired thickness. This may be accomplished by passing the membrane through a set of squeeze rolls positioned at a desired thickness. The membrane may then be allowed to cool and/or rolled for shipment and/or storage.

The polymeric composition that may be extruded to form the polymeric sheet may include the ingredients or constituents described herein. For example, the polymeric composition may include thermoplastic polyolefin, and isocyanate-reactive polymers defined herein. The ingredients may be mixed together by employing conventional polymer mixing equipment and techniques. In one or more embodiments, an extruder may be employed to mix the ingredients. For example, single-screw or twin-screw extruders may be employed.

### Industrial Applicability

The membranes described herein are used as roofing membranes that are useful for covering flat or low-sloped roofs. The membranes may also be useful as geomembranes. Geomembranes include those membranes employed as pond liners, water dams, animal waste treatment liners, and pond covers.

As described above, the membranes described herein are employed as roofing membranes. These membranes include thermoplastic roofing membranes including those that meet the specifications of ASTM D-6878-03. These membranes maybe employed to cover flat or low/sloped roofs. These roofs are generally known in the art as disclosed in U.S. Serial Nos. 60/586,424 and 11/343,466, and International Application No. PCT/US2005/024232. As shown in Fig. 3, a flat or low-sloped roof assembly 40 may include a roof deck 82, and optional insulation layer 84, and membrane 10.

Advantageously, the membranes are used to prepare adhered roofing systems, including fully-adhered systems and partially-adhered systems. The membranes are used in conjunction with polyurethane type adhesives. Generally, the polyurethane adhesive can be applied to a roof substrate to form a layer of adhesive, and then the membranes, which are devoid of any fleece backing, can subsequently be contacted to the layer of adhesive disposed on the substrate. Advantageously, the process can be used to construct a roofing system meeting the standards of UL and Factory Mutual for wind uplift in the absence of a fleece or other backing material applied to the membrane.

The substrate to which the polyurethane adhesive composition is applied may include a roof deck, which may include steel, concrete, and/or wood. In other embodiments, the polyurethane adhesive composition may be applied to insulation materials, such as insulation boards and cover boards. As those skilled in the art appreciate, insulation boards and cover boards may carry a variety of facer materials including, but not limited to, paper facers, fiberglass-reinforced paper facers, fiberglass facers, coated fiberglass facers, metal facers such as aluminum facers, and solid facers such as wood. In yet other embodiments, the polyurethane-based adhesive composition may be applied to existing membranes. These existing membranes may include cured rubber systems such as EPDM membranes, thermoplastic polymers systems such as TPO membranes, or asphalt-based systems such as modified asphalt membranes and/or built roof systems. Advantageously, practice of the present invention provides adhesion to asphalt-based substrates by offering sufficient oil resistance, which is required to maintain sufficient adhesion to asphalt systems.

In one or more embodiments, the polyurethane adhesive that is applied to the roof deck, as the methods and techniques for applying the adhesive to the substrate, includes those polyurethane adhesives that are commonly used in the art. In this respect, see U.S. Pat. No. 4,996,812. As is known in the art, one type of polyurethane adhesive system employs an isocyanate component and a polyol component, with the two components typically being mixed in a mix apparatus, such as a spray nozzle. These systems are typically referred to as two-part polyurethane adhesives. In other embodiments, an isocyanate prepolymer is employed and curing of the prepolymer relies upon moisture within the atmosphere, rather than on the use of a polyol. These systems are typically referred to as one-part polyurethane adhesive systems.

In one or more embodiments, suitable isocyanates include, but are not limited to, aromatic polyisocyanates such as diphenyl methane, diisocyanate in the form of its 2,4'-, 2,2'-, and 4,4'-isomers and mixtures thereof, the mixtures of diphenyl methane diisocyanates (MDI) and oligomers thereof known in the art as "crude" or polymeric MDI having an isocyanate functionality of greater than 2, toluene diisocyanate in the form of its 2,4' and 2,6'-isomers and mixtures thereof, 1,5-naphthalene diisocyanate, and 1,4' diisocyanatobenzene. Exemplary isocyanate components include polymeric Rubinate 1850 (Huntsmen Polyurethanes), polymeric Lupranate M70R (BASF), and polymeric Mondur 489N (Bayer).

In one or more embodiments, suitable polyols include diols, polyols, and glycols, which may contain water as generally known in the art. Primary and secondary amines are suitable, as are polyether polyols and polyester polyols. Useful polyester polyols include phthalic anhydride based PS-2352 (Stepen), phthalic anhydride based polyol PS-2412 (Stepen), teraphthalic based polyol 3522 (Kosa), and a blended polyol TR 564 (Oxid). Useful polyether polyols include those based on sucrose, glycerin, and toluene diamine. Examples of glycols include diethylene glycol, dipropylene glycol, and ethylene glycol. Suitable primary and secondary amines include, without limitation, ethylene diamine, and diethanolamine. In one embodiment a polyester polyol is employed. In one or more embodiments, the present invention may be practiced in the appreciable absence of any polyether polyol. In certain embodiments, the ingredients are devoid of polyether polyols.

In addition to the isocyanate and the polyol, the adhesive system may also include flame retardants, catalysts, emulsifiers/solubilizers, surfactants, blowing agents, fillers, fungicides, anti-static substances, defoamers, water and other ingredients that are conventional in the art.

Catalysts are believed to initiate the polymerization reaction between the isocyanate and the polyol, as well as a trimerization reaction between free isocyanate groups when polyisocyanurate foam is desired. While some catalysts expedite both reactions, two or more catalysts may be employed to achieve both reactions. Useful catalysts include salts of alkali metals and carboxylic acids or phenols, such as, for example potassium octoate; mononuclear or polynuclear Mannich bases of condensable phenols, oxo-compounds, and secondary amines, which are optionally substituted with alkyl groups, aryl groups, or aralkyl groups; tertiary amines, such as pentamethyldiethylene triamine (PMDETA), 2,4,6-tris[(dimethylamino)methyl]phenol, triethyl amine, tributyl amine, N-methyl morpholine, and N-ethyl morpholine; basic nitrogen compounds, such as tetra alkyl ammonium hydroxides, alkali metal hydroxides, alkali metal phenolates, and alkali metal acholates; and organic metal compounds, such as tin(II)-salts of carboxylic acids, tin(IV)-compounds, and organo lead compounds, such as lead naphthenate and lead octoate.

Exemplary surfactants include silicone co-polymers or organic polymers bonded to a silicone polymer. Although surfactants can serve both functions, a more cost effective method to ensure emulsification/solubilization may be to use enough emulsifiers/solubilizers to maintain emulsification/solubilization and a minimal amount of the surfactant to obtain good cell nucleation and cell stabilization. Examples of surfactants include Pelron surfactant 9920, Goldschmidt surfactant B8522, and GE 6912. U.S. Patent Nos. 5,686,499 and 5,837,742 show various useful surfactants.

Suitable emulsifiers/solubilizers include DABCO Kitane 20AS (Air Products), and Tergitol NP-9 (nonylphenol + 9 moles ethylene oxide).

In one or more embodiments, the equivalent ratio of isocyanate groups to isocyanate-reactive groups (i.e. polyol functionality) introduced to prepare the developing foam is at least 2.7:1, in other embodiments at least 2.85:1, in other embodiments at least 3.0:1, in other embodiments at least 3.15:1, and in other embodiments at least 3.25:1. In these or other embodiments, the equivalent ratio of isocyanate groups to isocyanate-reactive groups is less than 3.6:1, in other embodiments less than 3.5:1, and in other embodiments less than 3.4:1. As those skilled in the art appreciate, the equivalent ratio refers to ratio of the number of moles of isocyanate groups in a given weight of isocyanate reactant to the number of moles of isocyanate-reactive groups in a given weight of isocyanate-reactive reactant.

In one or more embodiments, time is permitted between the application of the adhesive composition and application of the membrane panel. This time allows the foam reactants to react and begin to develop sufficient "cream," then rise. Generally, the membrane is applied during the cream time or the rise time, but before the tack-free time, which is the period of time when the adhesive loses sufficient green strength. In one or more embodiments, this time provided is less than 1 hour, in other embodiments less than 30 minutes, in other embodiments less than 10 minutes, and in other embodiments less than 3 minutes.

In one or more embodiments, the application of the adhesive composition to the substrate can be performed by completely covering the substrate with the adhesive. In other embodiments, the substrate may be partially covered. In one or more embodiments, the adhesive is applied to the roof substrate in the form of a bead that may be about ¼ to about 1 inch in diameter or thickness. The adhesive is then allowed to cream and then rise, which can expand the size of the bead up to 2-3 inches in thickness or diameter. The membrane can then be rolled out or otherwise applied to the substrate, which thereby further spreads the foam adhesive. In one or more embodiments, these beads may be applied in strips at a distance of from about 1 foot to about 3 feed (or even up to 5 feet) in distance from one another. Spacing of strips can be adjusted to achieve various wind uplift ratings.

In one or more embodiments, the membrane panel may be applied to the adhesive layer using several known techniques. For example, the membrane panel may be unrolled on to the adhesive layer.

Practice of this invention is not limited by the selection of any particular roof deck. Accordingly, the roofing systems herein can include a variety of roof decks. Exemplary roof decks include concrete pads, steel decks, wood beams, and foamed concrete decks.

Practice of this invention is likewise not limited by the selection of any particular insulation board. Moreover, the insulation boards are optional. Several insulation materials can be employed including polyurethane or polyisocyanurate cellular materials. These boards are known as described in U.S. Patent Nos. 6,117,375, 6,044,604, 5,891,563, 5,573,092, U.S. Publication Nos. 2004/01099832003/0082365, 2003/0153656, 2003/0032351, and 2002/0013379, as well as U.S. Serial Nos. 10/640,895, 10/925,654, and 10/632,343.

In other embodiments, these membranes may be employed to cover flat or low-slope roofs following a re-roofing event. In one or more embodiments, the membranes may be employed for re-roofing as described in U.S. Publication No. 2006/0179749.

In order to demonstrate the practice of the present invention, the following examples have been prepared and tested. The examples should not, however, be viewed as limiting the scope of the invention. The claims will serve to define the invention.

### EXAMPLES

In an effort to exemplify practice of the present invention, the following experiments were performed. In general, lab-scale membranes were prepared using the polymers set forth in Table I below, which identifies the amounts used based on weight percent of the total of the polymers combined. A layer of polyurethane adhesive (two-part pre-mixed prior to application) was applied to one side of the membrane and allowed to cure for approximately 24 hours. After curing, the polyurethane layer was removed using a "pick test," whereby the polyurethane layer was removed, or attempted to be removed, from the membrane with use of one's fingers. The thermoplastic polyolefin (TPO) that was used was obtained under the tradename HIFAX CA 10 A (Lyondel Basell), and the polymer having an isocyanate-reactive functionality was obtained under the tradename Septon HG-252 (Kuraray). The compositions used to prepare the membranes also included an antioxidant package that remained constant for each membrane. No other constituents, such as fillers, where included in the membrane compositions.

**Table I**

| Samples | 1 | 2 | 3 | 4 | 5 | 6 |
|---|---|---|---|---|---|---|
| TPO | 100 | 50 | 92 | 75 | 0 | 95 |
| Iso-Reactive Polymer | 0 | 50 | 8 | 25 | 100 | 5 |
| Failure Mode | No Adhesion | Cohesive | Cohesive | Cohesive | Cohesive | Mixed |

As can be seen from the results in the table, the polyurethane adhesive adequately adhered to the membrane prepared exclusively with isocyanate-reactive polymer as shown in Sample 5. The mode of failure was cohesive, which refers to the fact that the adhesive itself was the mode of failure, not the adhesion between the membrane and the adhesive. Similar results were obtained at loadings down to 8 weight percent isocyanate-reactive polymer, as shown in Sample 3. At 5 weight percent isocyanate-reactive polymer, some level of adhesion was observed with cohesive failure within the adhesive, but some surfaces of the membrane showed no adhesion. Where the membrane sample did not include isocyanate-reactive polymer, no adhesion to the membrane was observed. It is believed that the results obtained in these tests demonstrate the usefulness of the invention, but it is also believed that lower loadings could be technologically useful where other conventional ingredients are employed within the membranes, such as fillers.

## Claims

1. An adhered roofing system comprising:
(i) a roof substrate;
(ii) a thermoplastic membrane (10) comprising:
an upper layer (14) laminated to a lower layer (12), a scrim reinforcement (16) disposed between the upper (14) and lower (12) layers and where at least a portion of the lower layer (12) includes a first thermoplastic polymer and a second polymer having at least one isocyanate-reactive substituent dispersed within said first thermoplastic polymer;
(iii) a polyurethane adhesive securing the membrane to the roof substrate.

2. The roofing system of claim 1, where the upper (14) layer includes a thermoplastic polymer and is substantially devoid of a polymer having at least one isocyanate-reactive substituent.

3. The roofing system of any of the preceding claims, where at least a portion of the lower layer (12) includes from about 3 to about 25 wt % of the polymer having at least one isocyanate-reactive substituent, and where isocyanate-reactive substituent is a hydroxyl group.

4. The roofing system of claim 1, where the lower layer (12) includes at least two coextruded layers (24), (26), and where a first of the two coextruded layers (26) includes the polymer having at least one isocyanate-reactive substituent.

5. The roofing system of any the preceding claims, where the polymer having at least one isocyanate-reactive substituent is a block copolymer including at least one hard segment and at least one soft segment.

6. The roofing system of any of the preceding claims, where the length of the polymer having at least one isocyanate-reactive substituent is at least one times the entanglement length of the polymer.

7. A method of adhering a thermoplastic membrane (10) to a roof substrate, the method comprising:
applying a polyurethane adhesive to the roof substrate; and
applying a thermoplastic membrane (10) to the polyurethane adhesive, where the thermoplastic membrane (10) includes at least one layer (12), wherein the at least one layer (12) includes a first thermoplastic polymer and a second polymer having at least one isocyanate-reactive substituent dispersed within said first thermoplastic polymer, and where the membrane (10) is devoid of a fleece backing.

8. The method of claim 7, where the membrane (10) further includes a second layer (14), where the second layer (14) includes a thermoplastic polymer and is substantially devoid of a polymer having at least one isocyanate-reactive substituent.

9. The method of claim 8, where the second layer (14) is laminated to the at least one layer (12), or where the second layer (14) is coextruded with the at least one layer (12).

10. The method of any of claims 7 to 9, where the at least one layer (12) includes from about 3 to about 25 wt % of the polymer having at least one hydroxyl substituent, and where isocyanate-reactive substituent is a hydroxyl group.

11. The method of any of claims 7 to 10, where the membrane (10) includes an upper layer (14) laminated to a lower layer (12), further includes a scrim reinforcement (16) disposed between the upper (14) and lower (12) layers, and where at least a portion of the lower layer (12) includes the polymer having at least one isocyanate-reactive substituent.

12. The method of claim 11, where the lower layer (12) includes at least two coextruded layers (24), (26), and where a first of the two coextruded layers (26) includes the polymer having at least one isocyanate-reactive substituent.

13. The membrane (10) of any of claims 1 to 6, where the polymer having at least one isocyanate-reactive substituent is a block copolymer including at least one hard segment and at least one soft segment.

14. The membrane (10) of any of claims 1 to 6, where the length of the polymer having at least one isocyanate-reactive substituent is at least one times the entanglement length of the polymer.

## Patentansprüche

1. Angeklebtes Bedachungssystem, umfassend:
(i) ein Dachsubstrat;
(ii) eine thermoplastische Membran (10), umfassend:
eine obere Schicht (14), die auf eine untere Schicht (12) laminiert ist, eine Gelegeverstärkung (16), die zwischen der oberen (14) und der unteren (12) Schicht angeordnet ist, und wobei mindestens ein Teil der unteren Schicht (12) ein erstes thermoplastisches Polymer und ein zweites Polymer mit mindestens einem isocyanatreaktiven Substituenten beinhaltet, der in dem ersten thermoplastischen Polymer dispergiert ist;
(iii) einen Polyurethanklebstoff, der die Membran an dem Dachsubstrat befestigt.

2. Bedachungssystem nach Anspruch 1, wobei die obere (14) Schicht ein thermoplastisches Polymer beinhaltet und im Wesentlichen frei von einem Polymer mit mindestens einem isocyanatreaktiven Substituenten ist.

3. Bedachungssystem nach einem der vorstehenden Ansprüche, wobei mindestens ein Teil der unteren Schicht (12) zu etwa 3 bis etwa 25 Gew.-% das Polymer mit mindestens einem isocyanatreaktiven Substituenten einschließt, und wobei der isocyanatreaktive Substituent eine Hydroxylgruppe ist.

4. Bedachungssystem nach Anspruch 1, wobei die untere Schicht (12) mindestens zwei coextrudierte Schichten (24), (26) einschließt, und wobei eine erste der beiden coextrudierten Schichten (26) das Polymer mit mindestens einem isocyanatreaktiven Substituenten einschließt.

5. Bedachungssystem nach einem der vorstehenden Ansprüche, wobei das Polymer mit mindestens einem isocyanatreaktiven Substituenten ein Blockcopolymer mit mindestens einem harten Segment und mindestens einem weichen Segment ist.

6. Bedachungssystem nach einem der vorstehenden Ansprüche, wobei die Länge des Polymers mit mindestens einem isocyanatreaktiven Substituenten mindestens das Doppelte der Verschlaufungslänge des Polymers beträgt.

7. Verfahren zum Kleben einer thermoplastischen Membran (10) auf ein Dachsubstrat, wobei das Verfahren Folgendes umfasst:
Aufbringen eines Polyurethanklebers auf das Dachsubstrat; und
Aufbringen einer thermoplastischen Membran (10) auf den Polyurethanklebstoff, wobei die thermoplastische Membran (10) mindestens eine Schicht (12) einschließt, wobei die mindestens eine Schicht (12) ein erstes thermoplastisches Polymer und ein zweites Polymer mit mindestens einem isocyanatreaktiven Substituenten einschließt, der in dem ersten thermoplastischen Polymer dispergiert ist, und wobei die Membran (10) frei von einem Vliesträger ist.

8. Verfahren nach Anspruch 7, wobei die Membran (10) ferner eine zweite Schicht (14) einschließt, wobei die zweite Schicht (14) ein thermoplastisches Polymer beinhaltet und im Wesentlichen frei von einem Polymer mit mindestens einem isocyanatreaktiven Substituenten ist.

9. Verfahren nach Anspruch 8, wobei die zweite Schicht (14) auf die mindestens eine Schicht (12) laminiert wird, oder wobei die zweite Schicht (14) mit der mindestens einen Schicht (12) coextrudiert wird.

10. Verfahren nach einem der Ansprüche 7 bis 9, wobei die mindestens eine Schicht (12) zu etwa 3 bis etwa 25 Gew.-% das Polymer mit mindestens einem Hydroxyl-Substituenten einschließt, und wobei der isocyanatreaktive Substituent eine Hydroxylgruppe ist.

11. Verfahren nach einem der Ansprüche 7 bis 10, wobei die Membran (10) eine obere Schicht (14) einschließt, die auf eine untere Schicht (12) laminiert ist, ferner eine Gelegeverstärkung (16) einschließt, die zwischen der oberen (14) und der unteren (12) Schicht angeordnet ist, und wobei mindestens ein Teil der unteren Schicht (12) das Polymer mit mindestens einem isocyanatreaktiven Substituenten einschließt.

12. Verfahren nach Anspruch 11, wobei die untere Schicht (12) mindestens zwei coextrudierte Schichten (24), (26) einschließt, und wobei eine erste der beiden coextrudierten Schichten (26) das Polymer mit mindestens einem isocyanatreaktiven Substituenten einschließt.

13. Membran (10) nach einem der Ansprüche 1 bis 6, wobei das Polymer mit mindestens einem isocyanatreaktiven Substituenten ein Blockcopolymer mit mindestens einem harten Segment und mindestens einem weichen Segment ist.

14. Membran (10) nach einem der Ansprüche 1 bis 6, wobei die Länge des Polymers mit mindestens einem isocyanatreaktiven Substituenten mindestens das Doppelte der Verschlaufungslänge des Polymers beträgt.

## Revendications

1. Système de toiture collé comprenant :
(i) un substrat de toit ;
(ii) une membrane thermoplastique (10) comprenant :
une couche supérieure (14) stratifiée sur une couche inférieure (12), un renfort de canevas (16) disposé entre les couches supérieure (14) et inférieure (12) et où au moins une partie de la couche inférieure (12) inclut un premier polymère thermoplastique et un second polymère ayant au moins un substituant réactif avec les isocyanates dispersé dans ledit premier polymère thermoplastique ;
(iii) un adhésif de polyuréthane fixant la membrane au substrat de toit.

2. Système de toiture selon la revendication 1, où la couche supérieure (14) inclut un polymère thermoplastique et est essentiellement dépourvue d'un polymère ayant au moins un substituant réactif avec les isocyanates.

3. Système de toiture selon l'une quelconque des revendications précédentes, où au moins une partie de la couche inférieure (12) inclut d'environ 3 à environ 25 % en poids du polymère ayant au moins un substituant réactif avec les isocyanates, et où le substituant réactif avec les isocyanates est un groupe hydroxyle.

4. Système de toiture selon la revendication 1, où la couche inférieure (12) inclut au moins deux couches coextrudées (24), (26), et où une première des deux couches coextrudées (26) inclut le polymère ayant au moins un substituant réactif avec les isocyanates.

5. Système de toiture selon l'une quelconque des revendications précédentes, où le polymère ayant au moins un substituant réactif avec les isocyanates est un copolymère séquencé incluant au moins un segment dur et au moins un segment mou.

6. Système de toiture selon l'une quelconque des revendications précédentes, où la longueur du polymère ayant au moins un substituant réactif avec les isocyanates est égale à au moins une fois la longueur d'enchevêtrement du polymère.

7. Procédé de collage d'une membrane thermoplastique (10) sur un substrat de toit, le procédé comprenant :
l'application d'un adhésif de polyuréthane sur le substrat de toit ; et
l'application d'une membrane thermoplastique (10) sur l'adhésif de polyuréthane, où la membrane thermoplastique (10) inclut au moins une couche (12), dans lequel l'au moins une couche (12) inclut un premier polymère thermoplastique et un second polymère ayant au moins un substituant réactif avec les isocyanates dispersé dans ledit premier polymère thermoplastique, et où la membrane (10) est dépourvue d'un support molletonné.

8. Procédé selon la revendication 7, où la membrane (10) inclut en outre une deuxième couche (14), où la deuxième couche (14) inclut un polymère thermoplastique et est essentiellement dépourvue d'un polymère ayant au moins un substituant réactif avec les isocyanates.

9. Procédé selon la revendication 8, où la deuxième couche (14) est stratifiée sur l'au moins une couche (12), ou où la deuxième couche (14) est coextrudée avec l'au moins une couche (12).

10. Procédé selon l'une quelconque des revendications 7 à 9, où l'au moins une couche (12) inclut d'environ 3 à environ 25 % en poids du polymère ayant au moins un substituant hydroxyle, et où le substituant réactif avec les isocyanates est un groupe hydroxyle.

11. Procédé selon l'une quelconque des revendications 7 à 10, où la membrane (10) inclut une couche supérieure (14) stratifiée sur une couche inférieure (12), inclut en outre un renfort de canevas (16) disposé entre les couches supérieure (14) et inférieure (12), et où au moins une partie de la couche inférieure (12) inclut le polymère ayant au moins un substituant réactif avec les isocyanates.

12. Procédé selon la revendication 11, où la couche inférieure (12) inclut au moins deux couches coextrudées (24), (26), et où une première des deux couches coextrudées (26) inclut le polymère ayant au moins un substituant réactif avec les isocyanates.

13. Membrane (10) selon l'une quelconque des revendications 1 à 6, où le polymère ayant au moins un substituant réactif avec les isocyanates est un copolymère séquencé incluant au moins un segment dur et au moins un segment mou.

14. Membrane (10) selon l'une quelconque des revendications 1 à 6, où la longueur du polymère ayant au moins un substituant réactif avec les isocyanates est égale à au moins une fois la longueur d'enchevêtrement du polymère.
